# FASCICULE DE BREVET EUROPEEN

(11) **EP 4 061 629 B1**
(45) Date de publication et mention de la délivrance du brevet: **10.01.2024**
(21) Numéro de dépôt: 20821343.9
(22) Date de dépôt: 18.11.2020
(51) Int. Cl.: B32B 3/04, B32B 7/12, B32B 17/04, B32B 17/06, B32B 17/10, B32B 27/30, B32B 27/36, B32B 27/40, B64C 1/14

(54) **VITRAGE FEUILLETÉ POUR VÉHICULE AÉRIEN LÉGER, CHAUFFANT SUR UNE PARTIE DE SA SURFACE**
VERBUNDGLASSCHEIBE FÜR EIN LEICHTES LUFTFAHRZEUG MIT HEIZUNG ÜBER EINEN TEIL IHRER OBERFLÄCHE
LAMINATED GLAZING FOR A LIGHT AERIAL VEHICLE, HEATING OVER A PORTION OF THE SURFACE THEREOF

(30) Priorité: 21.11.2019 FR 1913029
(43) Date de publication de la demande: 28.09.2022
(73) Titulaire: Saint-Gobain Glass France, 92400 Courbevoie (FR)
(72) Inventeur: TONDU, Thomas, 45110 Saint-Martin-d'Abbat (FR)
(74) Mandataire: Saint-Gobain Recherche
(86) Numéro de dépôt international: PCT/FR2020/052123
(87) Numéro de publication internationale: WO 2021/099741

(56) Documents cités:
- EP-A1- 2 743 080
- GB-A- 2 157 754

## Description

L'invention est relative à une solution de chauffage de la zone de vision pour des vitrages d'hélicoptère de grande dimension à base de plastique.

Les vitrages d'hélicoptère peuvent être équipés de solutions de chauffage intégrées de façon à prévenir l'apparition de givre ou de buée dans des conditions de vol sévères. Les solutions de chauffage sont apportées par effet joule à l'intérieur du vitrage. Ces vitrages sont donc nécessairement composés de plusieurs matériaux afin d'insérer dans ces derniers des éléments résistifs constitués soit de fils suffisamment fins pour permettre une bonne transmission lumineuse, soit d'une couche conductrice transparente ou semi transparente.

Par ailleurs les vitrages d'hélicoptère visent à assurer une masse minimale qui est dimensionnée soit par des exigences de raideur (maîtrise des déformations ou vibrations) dans l'enveloppe des conditions d'utilisation, soit par une exigence de résistance à l'impact d'oiseaux.

Enfin les vitrages d'hélicoptère sont particulièrement soumis à l'impact de gravillons qui peuvent par exemple être mis en suspension dans l'air par les turbulences aérodynamiques induites par les pales puis être projetés à grande vitesse sur les vitrages après percussion par une pale.

Les matériaux de choix pour résister aux chocs oiseau sur hélicoptère sont des plastiques (matériaux polymères organiques) tels que polycarbonate (PC), polyméthacrylate de méthyle (PMMA), polyvinylbutyral (PVB) ou polyuréthane thermoplastique (TPU).

Pour les vitrages non chauffants, des solutions non feuilletées peuvent être mises en oeuvre. On pourra alors considérer des matériaux tels que le PC qui apporte une excellente résistance à l'impact oiseau ou comme le PMMA qui vieillit mieux et est plus raide.

Ces plastiques sont également compatibles avec des vitrages de grande dimension avec des formes complexes (faibles rayons de courbure, formes non développables).

Néanmoins ces conceptions à une seule feuille de plastique ne permettent pas l'intégration d'un système chauffant.

En feuilletant deux feuilles de plastique on peut intégrer un réseau de fils chauffants. Néanmoins les technologies à fils chauffants induisent pour les vitrages en plastique une gêne optique sévère par génération d'un gradient de température autour de chaque fil et donc d'un gradient d'indice optique engendrant des lentilles optiques.

De plus les fils fins sont soumis à une fatigue mécanique ce qui dégrade leur durée de vie.

Enfin les réseaux de fils fins engendrent des reflets et des diffractions lumineuses gênantes pour les pilotes.

Les puissances spécifiques nécessaires aux fonctions antigivre sur hélicoptère sont difficilement compatibles avec des couches conductrices. Les solutions les plus robustes peuvent être à base d'or. Néanmoins ces solutions restent peu fiables pour des puissances spécifiques de 40W/dm². En outre les couches d'or sont colorées. En cas de forme complexe de la zone chauffée cela peut induire des variations de transmission lumineuse sur le vitrage gênante pour les pilotes.

L'utilisation de feuilles de verres apporte alors l'avantage d'être compatible avec le dépôt de couches conductrices plus performantes de type ITO (neutralité en couleur, compatible avec les fortes puissances spécifiques, transmission lumineuse élevée, compatibilité avec les formes de zone chauffante complexes). En cas d'utilisation de systèmes à fil, en les positionnant au contact du verre on réduit également les défauts optiques.

Toutefois le verre est fragile aux gravillons ce qui impose une épaisseur significative pénalisante pour la masse des vitrages. De plus la réalisation de grands vitrages en verre avec de faibles rayons de courbure et des formes fortement non développables est un problème industriellement non résolu.

EP 2 743 080 A1 divulgue un vitrage feuilleté pour cockpit d'hélicoptère constitué d'au moins deux feuilles de plastique transparentes en polyamide microcristallin couvrant l'intégralité de la surface du vitrage, deux feuilles intercalaires d'adhésif situées sous les feuilles transparentes et une couche centrale à base de polycarbonate ou polyamide microcristallin.

Pour pallier à ces inconvénients, l'invention a pour objet un vitrage feuilleté de véhicule aérien léger constitué d'au moins
- une feuille de plastique transparent structurale couvrant l'intégralité de la surface du vitrage,
- une feuille de plastique transparent de protection couvrant l'intégralité de la surface du vitrage,
- une colle dite intercalaire liant les feuilles structurale et de protection,
- un verre couvert d'une couche conductrice à fonction de chauffage incorporé au sein de la colle et couvrant une fraction de la surface du vitrage au plus égale à 66% contenant la zone de vision principale.

On propose de réaliser un vitrage feuilleté composé sur toute sa surface d'une feuille de plastique dite structurale et d'une feuille de protection plastique, collées entre elles par un matériau plastique souple dit intercalaire. La fonction de chauffage est alors apportée par un verre mince couvert d'une couche conductrice transparente et positionné au sein du matériau intercalaire dans une zone réduite du vitrage couvrant la zone de vision privilégiée.

La réduction de la surface du verre chauffant par rapport à la surface du vitrage permet alors de simplifier sa fabrication. De plus en se limitant à la zone de vision principale on évite de couvrir les zones hautes et basses à forte courbure.

On entend par zone de vision principale la zone devant nécessairement être dégivrante pour autoriser des utilisations de l'appareil en conditions de vol givrantes.

Avec la présente invention :
- le chauffage peut être appliqué sur verre ce qui permet la mise en oeuvre de couches conductrices transparentes à bonnes performances optiques ;
- le verre n'étant pas exposé aux gravillons il peut être mince ce qui permet une masse de vitrage raisonnable ;
- la zone couverte par le verre est restreinte ce qui permet de réduire considérablement la complexité de fabrication du verre ; cela limite également la masse du vitrage ;
- le système chauffant est encapsulé dans le vitrage plastique ce qui réduit les risques liés à la pénétration d'humidité et les amorçages de délaminage périphériques.

De préférence, les feuilles de plastique structurale et de protection sont constituées de polyméthacrylate de méthyle (PMMA), polycarbonate (PC), polyuréthane (PU), polyester, seul ou en combinaison, mélange, alliage ou copolymère de plusieurs d'entre eux.

De préférence, la colle est constituée de polyuréthane thermoplastique (TPU), polyvinylbutyral (PVB) ou éthylène - acétate de vinyle (EVA) seul ou en combinaison, mélange, alliage ou copolymère de plusieurs d'entre eux.

De préférence, l'épaisseur de la feuille de plastique structurale est comprise entre 4 et 9 mm.

Selon un mode de réalisation de l'invention, la feuille de plastique structurale est un feuilleté de matériaux identiques ou différents.

De préférence, l'épaisseur de la feuille de protection est comprise entre 0,5 mm et 4 mm, préférentiellement entre 1 et 1,5 mm.

De préférence, l'épaisseur de la couche adhésive intercalaire de colle est comprise entre 1,5 et 4 mm.

De préférence, les feuilles de plastique structurale et de protection ont une épaisseur totale comprise entre 4 et 9mm. Le poids du vitrage feuilleté est alors contenu et suffisant pour satisfaire les exigences mécaniques requises pour un vitrage d'hélicoptère.

De préférence, l'une au moins des deux faces extérieures du vitrage feuilleté présente au moins une fonctionnalisation de type hydrophobe (tel que silane fluoré), hydrophile, anti abrasion (tel que polysiloxane), dissipateur électrique.

De préférence, l'épaisseur du verre est comprise entre 0,5 et 1,2 mm, préférentiellement entre 0,5 et 0,7 mm.

De préférence, le verre est de type sodocalcique, borosilicate, aluminosilicate ayant subi un renforcement chimique.

Conformément à deux variantes de l'invention, la couche conductrice est sur la face du verre orientée soit vers la feuille de plastique de protection, soit vers la feuille de plastique structurale.

De préférence, la couche conductrice est de type oxyde métallique dopé transparent (préférentiellement oxyde d'indium dopé à l'étain -en anglais ITO pour Indium Tin Oxide-), métallique (préférentiellement argent ou or) ou métallique interférentiel (de préférence argent).

De préférence, la surface du verre est limitée à la zone de vision principale augmentée d'une largeur au moins égale à 10 mm, préférentiellement la zone de vision principale augmentée de 10 à 200 mm sur sa périphérie.

De préférence, le vitrage feuilleté est adapté à être directement boulonné au véhicule ou collé à un cadre boulonné au véhicule ou collé sur le véhicule.

De préférence, la liaison mécanique véhicule/vitrage se fait uniquement sur la feuille de plastique structurale ou sur le feuilleté feuille de plastique structurale + feuille de plastique de protection.

L'invention a également pour objet une première application d'un vitrage feuilleté tel que décrit ci-dessus comme vitrage antigivre, dans laquelle la feuille de plastique de protection est destinée à être orientée vers l'atmosphère extérieure. L'objet premier de cette application est la gestion du givre susceptible de se former sur la surface du vitrage en contact avec l'atmosphère extérieure.

Un dernier objet de l'invention consiste en une seconde application d'un vitrage feuilleté tel que décrit ci-dessus comme vitrage antibuée, dans laquelle la feuille de plastique de protection est destinée à être orientée vers l'intérieur du véhicule. L'objet premier de cette application est la gestion de la buée susceptible de se former sur la surface du vitrage en contact avec l'intérieur du véhicule.

Dans certaines utilisations du vitrage feuilleté de l'invention, sous certains climats, du givre est également susceptible de se former sur la face du vitrage feuilleté en contact avec l'intérieur du véhicule. La puissance de chauffage de la couche conductrice est opportunément adaptée pour que la gestion de ce givre soit réalisée en plus de la première ou de la seconde application précitée, selon le cas.

Bien que ce ne soit pas une variante préférée de l'invention, celle-ci n'exclut nullement qu'une feuille de plastique de protection soit collée de part et d'autre de la feuille de plastique structurale, un verre couvert d'une couche conductrice à fonction de chauffage étant incorporé au sein de chacune des deux couches intercalaires de colle.

L'invention est maintenant illustrée par la description suivante du dessin unique annexé :

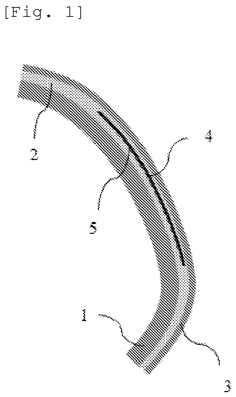

[Fig. 1] la figure 1 représente schématiquement en coupe un vitrage chauffant d'hélicoptère selon l'invention.

En référence à la figure 1, un vitrage d'hélicoptère présente des courbures les plus prononcées en parties haute et basse, une double courbure et une géométrie non développable. Il est constitué d'une feuille structurale 1 de PMMA de 6 mm d'épaisseur feuilletée à une feuille de protection 3 de PMMA de 1,25 mm d'épaisseur au moyen d'une couche adhésive intercalaire 2 de TPU de 2,25 mm d'épaisseur.

Dans une partie centrale de la surface du vitrage feuilleté, une feuille de verre 4 aluminosilicate renforcé chimique de 0,7 mm d'épaisseur est incorporée dans la couche adhésive 2. La feuille de verre 4 porte sur sa face orientée vers la feuille structurale 1 une couche chauffante d'ITO. Celle-ci permet d'empêcher la formation de givre sur la surface libre de la feuille de protection 3, en contact avec l'atmosphère extérieure. On remarque que la feuille de verre 4 est relativement plane à très légèrement courbée, circonscrite dans la zone de vision principale du vitrage feuilleté, qui comporte, au-dessus, respectivement en-dessous de la feuille de verre 4, des zones de courbure complexe à surface non développable.

## Revendications

1. Vitrage feuilleté de véhicule aérien léger constitué d'au moins
- une feuille de plastique transparent structurale (1) couvant l'intégralité de la surface du vitrage,
- une feuille de plastique transparent de protection (3) couvrant l'intégralité de la surface du vitrage,
- une colle (2) dite intercalaire liant les feuilles structurale (1) et de protection (3),
- un verre (4) couvert d'une couche conductrice (5) à fonction de chauffage incorporé au sein de la colle (2) et couvrant une fraction de la surface du vitrage au plus égale à 66% contenant la zone de vision principale.

2. Vitrage feuilleté selon la revendication 1, **caractérisé en ce que** les feuilles de plastique structurale (1) et de protection (3) sont constituées de polyméthacrylate de méthyle (PMMA), polycarbonate (PC), polyuréthane (PU), polyester, seul ou en combinaison, mélange, alliage ou copolymère de plusieurs d'entre eux.

3. Vitrage feuilleté selon l'une des revendications précédentes, **caractérisé en ce que** la colle (2) est constituée de polyuréthane thermoplastique(TPU), polyvinylbutyral (PVB) ou éthylène - acétate de vinyle (EVA) seul ou en combinaison, mélange, alliage ou copolymère de plusieurs d'entre eux.

4. Vitrage feuilleté selon l'une des revendications précédentes, **caractérisé en ce que** l'épaisseur de la feuille de plastique structurale (1) est comprise entre 4 et 9 mm.

5. Vitrage feuilleté selon l'une des revendications précédentes, **caractérisé en ce que** la feuille de plastique structurale (1) est un feuilleté de matériaux identiques ou différents.

6. Vitrage feuilleté selon l'une des revendications précédentes, **caractérisé en ce que** l'épaisseur de la feuille de protection (3) est comprise entre 0,5 mm et 4 mm, préférentiellement entre 1 et 1,5 mm.

7. Vitrage feuilleté selon l'une des revendications précédentes, **caractérisé en ce que** l'épaisseur de la couche adhésive intercalaire de colle (2) est comprise entre 1,5 et 4 mm.

8. Vitrage feuilleté selon l'une des revendications précédentes, **caractérisé en ce que** les feuilles de plastique structurale (1) et de protection (3) ont une épaisseur totale comprise entre 4 et 9 mm.

9. Vitrage feuilleté selon l'une des revendications précédentes, **caractérisé en ce que** l'une au moins de ses deux faces extérieures présente au moins une fonctionnalisation de type hydrophobe, hydrophile, anti abrasion, dissipateur électrique.

10. Vitrage feuilleté selon l'une des revendications précédentes, **caractérisé en ce que** l'épaisseur du verre (4) est comprise entre 0,5 et 1,2 mm, préférentiellement entre 0,5 et 0,7 mm.

11. Vitrage feuilleté selon l'une des revendications précédentes, **caractérisé en ce que** le verre (4) est de type sodocalcique, borosilicate, aluminosilicate ayant subi un renforcement chimique.

12. Vitrage feuilleté selon l'une des revendications précédentes, **caractérisé en ce que** la couche conductrice (5) est sur la face du verre (4) orientée vers la feuille de plastique de protection (3) ou structurale (1).

13. Vitrage feuilleté selon l'une des revendications précédentes, **caractérisé en ce que** la couche conductrice (5) est de type oxyde métallique dopé transparent (préférentiellement oxyde d'indium dopé à l'étain -en anglais ITO pour Indium Tin Oxide-), métallique (préférentiellement argent ou or) ou métallique interférentiel (de préférence argent).

14. Vitrage feuilleté selon l'une des revendications précédentes, **caractérisé en ce que** la surface du verre (4) est limitée à la zone de vision principale augmentée d'une largeur au moins égale à 10 mm, préférentiellement la zone de vision principale augmentée de 10 à 200 mm sur sa périphérie.

15. Vitrage feuilleté selon l'une des revendications précédentes, **caractérisé en ce qu'**il est adapté à être directement boulonné au véhicule ou collé à un cadre boulonné au véhicule ou collé sur le véhicule.

16. Vitrage feuilleté selon l'une des revendications précédentes, **caractérisé en ce que** la liaison mécanique véhicule/vitrage se fait uniquement sur la feuille de plastique structurale (1) ou sur le feuilleté feuille de plastique structurale (1) + feuille de plastique de protection (3).

17. Application d'un vitrage feuilleté selon l'une des revendications précédentes comme vitrage antigivre, dans laquelle la feuille de plastique de protection (3) est destinée à être orientée vers l'atmosphère extérieure.

18. Application d'un vitrage feuilleté selon l'une des revendications 1 à 16 comme vitrage antibuée, dans laquelle la feuille de plastique de protection (3) est destinée à être orientée vers l'intérieur du véhicule.

## Patentansprüche

1. Verbundglasscheibe für ein leichtes Luftfahrzeug, mindestens bestehend aus
- einer transparenten strukturellen Kunststofffolie (1), die die gesamte Oberfläche der Verglasung bedeckt,
- einer transparenten Kunststoff-Schutzfolie (3), die die gesamte Oberfläche der Verglasung bedeckt,
- einer Klebstoff-Zwischenlage (2), die die strukturelle (1) und die Schutzfolie (3) verbindet,
- einem Glas (4), das mit einer leitfähigen Schicht (5) mit Heizfunktion bedeckt ist, die in den Klebstoff (2) eingebettet ist und einen Anteil der Oberfläche der Verglasung von höchstens 66 % bedeckt, der den Hauptbereich der Sichtfläche enthält.

2. Verbundglasscheibe nach Anspruch 1, **dadurch gekennzeichnet, dass** die strukturelle Kunststofffolie (1) und die Kunststoff-Schutzfolie (3) aus Polymethylmethacrylat (PMMA), Polycarbonat (PC), Polyurethan (PU), Polyester, einzeln oder in Kombination, Gemisch, Legierung oder Copolymer von mehreren davon bestehen.

3. Verbundglasscheibe nach einem der vorstehenden Ansprüche,
**dadurch gekennzeichnet, dass** der Klebstoff (2) aus thermoplastischem Polyurethan (TPU), Polyvinylbutyral (PVB) oder Ethylenvinylacetat (EVA) allein oder in Kombination, Gemisch, Legierung oder Copolymer von mehreren davon besteht.

4. Verbundglasscheibe nach einem der vorstehenden Ansprüche,
**dadurch gekennzeichnet, dass** die Dicke der strukturellen Kunststofffolie (1) zwischen 4 und 9 mm beträgt.

5. Verbundglasscheibe nach einem der vorstehenden Ansprüche,
**dadurch gekennzeichnet, dass** die strukturelle Kunststofffolie (1) ein Verbund aus gleichen oder unterschiedlichen Materialien ist.

6. Verbundglasscheibe nach einem der vorstehenden Ansprüche,
**dadurch gekennzeichnet, dass** die Dicke der Schutzfolie (3) zwischen 0,5 mm und 4 mm beträgt, vorzugsweise zwischen 1 und 1,5 mm.

7. Verbundglasscheibe nach einem der vorstehenden Ansprüche,
**dadurch gekennzeichnet, dass** die Dicke der Zwischenlagenschicht aus Klebstoff (2) zwischen 1,5 und 4 mm beträgt.

8. Verbundglasscheibe nach einem der vorstehenden Ansprüche,
**dadurch gekennzeichnet, dass** die die strukturelle Kunststofffolie (1) und die Kunststoff-Schutzfolie (3) eine Gesamtdicke zwischen 4 und 9 mm aufweisen.

9. Verbundglasscheibe nach einem der vorstehenden Ansprüche,
**dadurch gekennzeichnet, dass** mindestens eine ihrer zwei Außenflächen mindestens eine Funktion der Art hydrophob, hydrophil, abriebfest oder elektrisch ableitend aufweist.

10. Verbundglasscheibe nach einem der vorstehenden Ansprüche,
**dadurch gekennzeichnet, dass** die Dicke des Glases (4) zwischen 0,5 und 1,2 mm, vorzugsweise zwischen 0,5 und 0,7 mm beträgt.

11. Verbundglasscheibe nach einem der vorstehenden Ansprüche,
**dadurch gekennzeichnet, dass** das Glas (4) von der Art Natronkalk, Borosilikat oder chemisch verstärktes Aluminosilikat ist.

12. Verbundglasscheibe nach einem der vorstehenden Ansprüche,
**dadurch gekennzeichnet, dass** die leitfähige Schicht (5) sich auf der Fläche des Glases (4) befindet, die zu der Kunststoff-Schutzfolie (3) oder der strukturellen Kunststofffolie (1) ausgerichtet ist.

13. Verbundglasscheibe nach einem der vorstehenden Ansprüche,
**dadurch gekennzeichnet, dass** die leitfähige Schicht (5) der Art transparentes dotiertes Metalloxid (vorzugsweise mit Zinn dotiertes Indiumoxid - im Englischen ITO für Indium Tin Oxide -), Metall (vorzugsweise Silber oder Gold) oder Interferenzmetall (vorzugsweise Silber) ist.

14. Verbundglasscheibe nach einem der vorstehenden Ansprüche,
**dadurch gekennzeichnet, dass** die Oberfläche des Glases (4) auf die Hauptsichtfläche beschränkt ist, die um eine Breite von mindestens 10 mm vergrößert ist, wobei vorzugsweise die Hauptsichtfläche an ihrem Umfang um 10 bis 200 mm vergrößert ist.

15. Verbundglasscheibe nach einem der vorstehenden Ansprüche,
**dadurch gekennzeichnet, dass** sie zum direkten Verschrauben mit dem Fahrzeug oder zum Verkleben mit einem mit dem Fahrzeug verschraubten oder an das Fahrzeug geklebten Rahmen geeignet ist.

16. Verbundglasscheibe nach einem der vorstehenden Ansprüche,
**dadurch gekennzeichnet, dass** die mechanische Verbindung von Fahrzeug/Verglasung ausschließlich auf der strukturellen Kunststofffolie (1) oder auf dem Verbund strukturelle Kunststofffolie (1) + Kunststoff-Schutzfolie (3) erfolgt.

17. Verwendung einer Verbundglasscheibe nach einem der vorstehenden Ansprüche als Frostschutzverglasung, wobei die Kunststoff-Schutzfolie (3) dazu bestimmt ist, zu der äußeren Umgebung hin ausgerichtet zu sein.

18. Verwendung einer Verbundglasscheibe nach einem der Ansprüche 1 bis 16 als Antibeschlagverglasung, wobei die Kunststoff-Schutzfolie (3) dazu bestimmt ist, zu dem Inneren des Fahrzeugs hin ausgerichtet zu sein.

## Claims

1. Laminated glazing for a light air vehicle consisting of at least
- a transparent structural plastic sheet (1) which covers the entire surface of the glazing,
- a transparent protective plastic sheet (3) which covers the entire surface of the glazing,
- a so-called interlayer adhesive (2) which binds the structural plastic sheet (1) and the protective (3) plastic sheet,
- a glass (4) which is covered with a conductive layer (5) having a heating function incorporated within the adhesive (2) and which covers a fraction at most equal to 66% of the surface area of the glazing which contains the main viewing zone.

2. Laminated glazing according to claim 1, **characterized in that** the structural plastic sheet (1) and the protective plastic sheet (3) are made of polymethyl methacrylate (PMMA), polycarbonate (PC), polyurethane (PU), polyester, alone or in combinations, mixtures, alloys or copolymers of multiple thereof.

3. Laminated glazing according to either of the preceding claims,
**characterized in that** the adhesive (2) is made of thermoplastic polyurethane (TPU), polyvinyl butyral (PVB) or ethylene-vinyl acetate (EVA) alone or in combinations, mixtures, alloys or copolymers of multiple thereof.

4. Laminated glazing according to any of the preceding claims,
**characterized in that** the thickness of the structural plastic sheet (1) is between 4 and 9 mm.

5. Laminated glazing according to any of the preceding claims,
**characterized in that** the structural plastic sheet (1) is a laminate of identical or different materials.

6. Laminated glazing according to any of the preceding claims,
**characterized in that** the thickness of the protective sheet (3) is between 0.5 mm and 4 mm, preferentially between 1 and 1.5 mm.

7. Laminated glazing according to any of the preceding claims,
**characterized in that** the thickness of the adhesive interlayer (2) is between 1.5 and 4 mm.

8. Laminated glazing according to any of the preceding claims,
**characterized in that** the structural plastic sheet (1) and the protective plastic sheet (3) have a total thickness of between 4 and 9 mm.

9. Laminated glazing according to any of the preceding claims,
**characterized in that** at least one of its two exterior faces has at least one hydrophobic, hydrophilic, anti-abrasion and electrical dissipater functionalization.

10. Laminated glazing according to any of the preceding claims,
**characterized in that** the thickness of the glass (4) is between 0.5 and 1.2 mm, preferentially between 0.5 and 0.7 mm.

11. Laminated glazing according to any of the preceding claims,
**characterized in that** the glass (4) is of the soda-lime, borosilicate, aluminosilicate type having undergone chemical reinforcement.

12. Laminated glazing according to any of the preceding claims,
**characterized in that** the conductive layer (5) is on the face of the glass (4) oriented toward the protective plastic sheet (3) or the structural plastic sheet (1).

13. Laminated glazing according to any of the preceding claims,
**characterized in that** the conductive layer (5) is of the transparent doped metal oxide type (preferentially indium tin oxide (ITO)), metal type (preferentially silver or gold) or interference metal type (preferably silver).

14. Laminated glazing according to any of the preceding claims,
**characterized in that** the surface of the glass (4) is limited to the main vision zone increased by a width at least equal to 10 mm, preferentially the main vision zone increased by 10 to 200 mm on its periphery.

15. Laminated glazing according to any of the preceding claims,
**characterized in that** it is suitable for being directly bolted to the vehicle or adhesively bonded to a frame bolted to the vehicle or adhesively bonded to the vehicle.

16. Laminated glazing according to any of the preceding claims,
**characterized in that** the vehicle/glazing mechanical connection is made only on the structural plastic sheet (1) or on the laminated structural plastic sheet (1) + protective plastic sheet (3).

17. Application of a laminated glazing according to any of the preceding claims as an anti-ice glazing, wherein the protective plastic sheet (3) is intended to be oriented toward the exterior atmosphere.

18. Application of a laminated glazing according to any of claims 1 to 16 as an antifog glazing, wherein the protective plastic sheet (3) is intended to be oriented toward the interior of the vehicle.
